# EUROPÄISCHE PATENTSCHRIFT

(11) **EP 1 052 136 B1**
(45) Veröffentlichungstag und Bekanntmachung des Hinweises auf die Patenterteilung: **02.12.2009**
(21) Anmeldenummer: 00109912.6
(22) Anmeldetag: 10.05.2000
(51) Int. Cl.: B60L 9/30

(54) **Einspeiseschaltung für Mehrsystemtriebzüge**
Supply system for a multi-system traction vehicle
Circuit d'alimentation pour un véhicule ferroviaire à système multiple

(30) Priorität: 11.05.1999 DE 19921774
(43) Veröffentlichungstag der Anmeldung: 15.11.2000
(73) Patentinhaber: SIEMENS AKTIENGESELLSCHAFT, 80333 München (DE)
(72) Erfinder: Brockmeyer, Ansgar, Dr., 91058 Erlangen (DE)

(56) Entgegenhaltungen:
- EP-A- 0 147 280
- EP-A- 0 204 690
- EP-A- 0 698 519
- PATENT ABSTRACTS OF JAPAN vol. 1996, no. 01, 31. Januar 1996 (1996-01-31) & JP 07 236202 A (HITACHI LTD), 5. September 1995 (1995-09-05)

## Beschreibung

Die Erfindung betrifft eine Einspeiseschaltung für Mehrsystemtriebzüge nach dem Oberbegriff des Patentanspruches 1.

Es ist bekannt, bei Gleichspannungstriebzügen zwischen den Pulswechselrichter der Einspeiseschaltung und den Stromabnehmer bzw. Fahrdraht eine Netzfilterdrossel zu schalten, deren Aufgabe darin besteht, von dem Pulswechselrichter erzeugte Schaltstörungen auszufiltern, damit sie nicht in den Fahrdraht gelangen. Die Größe der Netzfilterdrossel wird dabei in Abhängigkeit von den Anforderungen, die sich daraus ergeben, welche Störströme netzseitig zugelassen werden, und andererseits in Abhängigkeit von den, von dem Pulswechselrichter generierten Störspannungen bestimmt.

Bei Wechselstromtriebzügen besteht die Einspeiseschaltung aus wenigstens einem Vierquadrantensteller, wobei zwischen den Eingang des Vierquadrantenstellers und den Stromabnehmer bzw. Fahrdraht ein Transformator zur Potentialtrennung geschaltet ist. Dieser Transformator umfaßt üblicherweise eine sehr hohe Streuinduktivität, mit deren Hilfe Störungen, die vom Vierquadrantensteller und/oder vom Pulswechselrichter erzeugt werden, vom Netz fern gehalten werden. Wenn man die Sekundärwicklung mit einer sehr hohen Streuinduktivität auslogt, hat dies jedoch zur Folge, daß der Transformator sehr großvolumig und schwer wird. Aus diesem Grunde wurden bereits Transformatoren mit einer niedrigen Streuinduktivität eingesetzt, zu denen eine Zusatzdrossel sekundärseitig in Reihe geschaltet ist, wobei die Zusatzdrossel die zuvor angesprochene Unterdrückung der Störspannungen bewirkt. Ein Problem bei dieser Lösung besteht jedoch darin, daß zwar der Transformator selbst flach beschaffen sein kann, was für eine niedrige Bauhöhe von Bedeutung ist, daß jedoch die Größe und das Gewicht der Zusatzdrossel nach wie vor in Kauf genommen werden müssen.

Aus der Druckschrift "Appun, Peter; Reichelt, Erich, Mehrsystemlokomotiven - heutige technische Möglichkeiten der Realisierung, in ETR (1989) Heft 4 - April S. 195-200" geht eine Einspeiseschaltung für Mehrsystemtriebzüge hervor, bei der eine Netzfilterdrossel zwischen den Vierquadrantensteller und den Gleichstrom-Fahrdraht schaltbar ist.

In der EP 0 147 280 B1 ist eine Vorrichtung zum Speisen eines Gleichstrom-Motors einer Lokomotive beschrieben, bei der beim Gleichstrombetrieb eine Filterdrossel zwischen eine Wandlereinheit und den Gleichstrom-Fahrdraht schaltbar ist, wobei im Wechselstrombetrieb die mit der Wandlereinheit verbundene Filterdrossel in Reihe zu der Sekundärwicklung des Transformators schaltbar ist, dessen Primärwicklung vom Wechselstrom-Fahrdraht gespeist wird.

Die Aufgabe der vorliegenden Erfindung besteht darin, eine Einspeiseschaltung für Mehrsystemtriebzüge zu schaffen, durch die sich erhebliche Kosten-, Gewichts- und Einbauraumreduzierungen erreichen lassen.

Diese Aufgabe wird durch eine Einspeiseschaltung mit den Merkmalen des Patenanspruches 1 gelöst.

Der wesentliche Vorteil der vorliegenden Erfindung besteht darin, daß durch die Realisierung einer im Gleichstrombetrieb als Netzfilterdrossel und im Wechselstrombetrieb als Streuinduktivität als ein und dasselbe Bauteil verwendbaren Drossel eine wesentliche Gewichts- und Einbauraumreduzierung bei Mehrsystemtriebzügen erreichbar ist. Zudem lassen sich geringe Bauhöhen erzielen, was insbesondere bei Niederflur-Fahrzeugen von Bedeutung ist. Ein weiterer Vorteil besteht darin, daß der für den Wechselstrombetrieb erforderliche Transformator und die Zusatzsdrossel jeweils getrennt optimiert werden können, so daß sich in Summe niedrigere Verluste und ein höherer Gesamtwirkungsgrad ergeben. Durch die gleichzeitige Verwendung einer Zusatzdrossel im Wechselstrombetrieb als Streuinduktivität und im Gleichstrombetrieb als Netzfilterdrossel lassen sich auch erhebliche Kosten einsparen. Eine weitere Reduzierung der Bauhöhe läßt sich dadurch erreichen, daß der Wicklungsdurchmesser des Transformators reduziert werden kann, da eine getrennte Streuinduktivität vorhanden ist.

Vorteilhafte Ausgestaltungen der Erfindung gehen aus den Unteransprüchen hervor.

Im folgenden werden die Erfindungen und deren Ausgestaltungen im Zusammenhang mit der Figur näher erläutert. Es zeigen:
- Figur 1: eine erste Ausführungsform der erfindungsgemäßen Einspeiseschaltung;
- Figur 2: eine zweite Ausführungsform der erfindungsgemäßen Einspeiseschaltung und
- Figur 3: eine dritte Ausführungsform der erfindungsgemäßen Einspeiseschaltung.

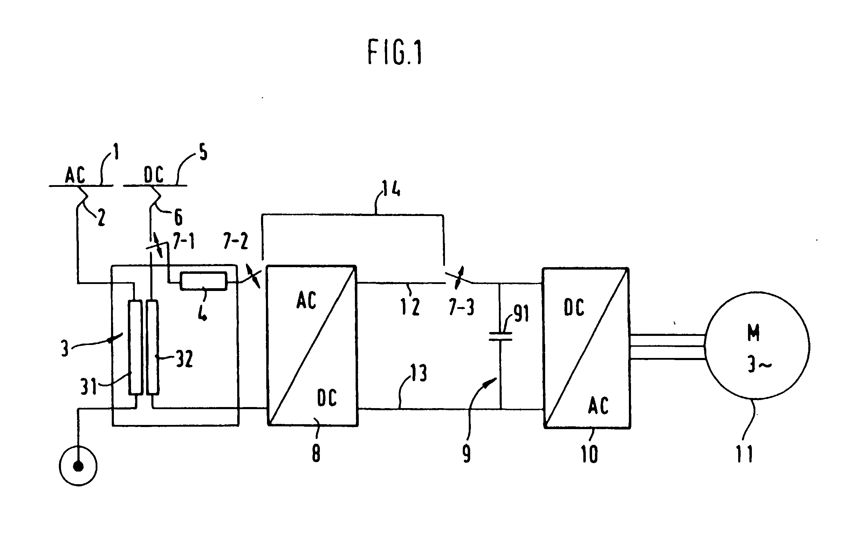

Die Figur 1 zeigt eine vorliegende Einspeiseschaltung für Mehrsystemtriebzüge, die im wesentlichen aus wenigstens einem Vierquadrantensteller 8, dem ausgangsseitig an den Leitungen 12 und 13 der Kondensator 91 eines Zwischenkreises 9 und wenigstens ein Pulswechselrichter 10 parallel geschaltet sind. Ausgangsseitig ist der Pulswechselrichter 10 mit dem Antrieb 11 eines Mehrsystemtriebzuges verbunden. Im Gleichstrombetrieb (DC-Betrieb) wird der Gleichstrom von dem Fahrdraht 5 über den Stromabnehmer 6 in den Zwischenkreis 9 bzw. den Pulswechselrichter 10 über die den Vierquadrantensteller 8 überbrückende Leitung 14 und die Zusatzdrossel 4 eingespeist, die als Netzfilterdrossel wirkt. Die Schalter 7-1, 7-2 und 7-3 befinden sich dann in der Figur 1 jeweils in ihren oberen Stellungen.

Im Wechselstrombetrieb (AC-Betrieb) wird der Stromabnehmer 2 mit dem Fahrdraht 1 verbunden, so daß die Einspeisung über den Transformator 3 erfolgt, dessen Primärwicklung 31 dann zwischen Masse und den Fahrdraht 1 geschaltet ist. Da sich die Schalter 7-1, 7-2, 7-3 in der Figur 1 jeweils in der unteren Stellung befinden, wird die Zusatzdrossel 4 zu der Sekundärwicklung 32 des Transformators 3 in Reihe geschaltet und wird die Reihenschaltung aus Zusatzdrossel 4 und Sekunkärwicklung 32 mit den Eingängen des Vierquadrantenstellers 8 verbunden. Die Verbindung zum Fahrdraht 5 und die Überbrükkung des Vierquadrantenstellers 8 sind unterbrochen.

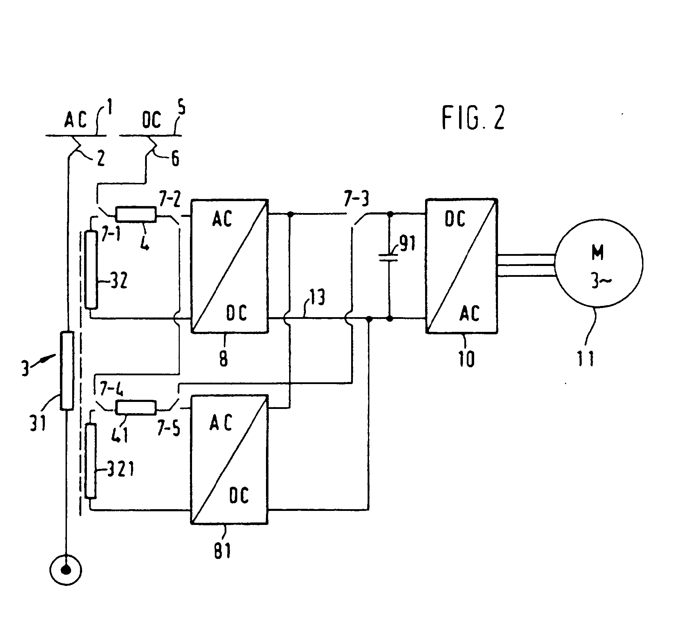

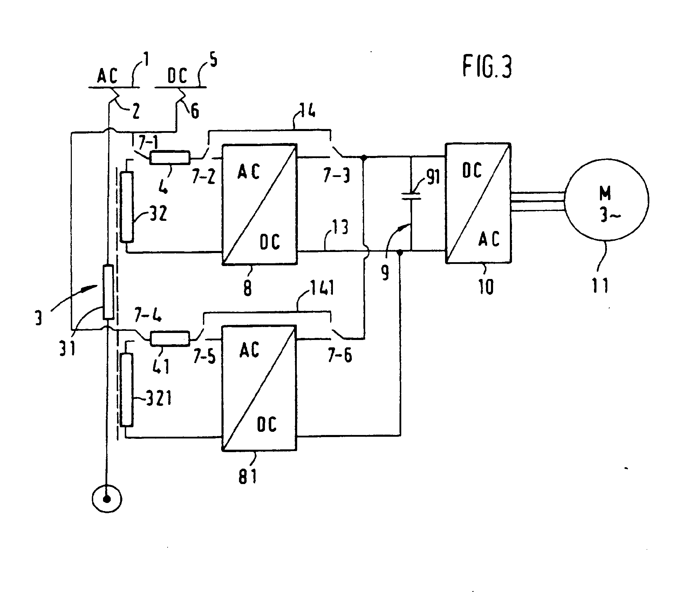

Je nach Auslegung der Einspeiseschaltung können gemäß der Figuren 2 und 3 zwei oder mehrere Vierquadrantensteller 8, 81 etc. zum Zwischenkreis 9 parallel geschaltet sein. In diesem Fall wird für jeden Vierquadrantensteller 8, 81 eine eigene Zusatzdrossel 4, 41 vorgesehen.

Gemäß Figur 2 werden die Zusatzdrosseln 4, 41 durch die Kontakte 7-1, 7-2, 7-3, 7-4, 7-5 der Schalteinrichtung im Wechselstrombetrieb zu einer eigenen Sekunkärwicklung 32, 321 des Transformators 3 in Reihe geschaltet. (in Figur 2: untere Stellungen der Kontakte 7-1, 7-4, 7-5 und obere Stellungen der Kontakte 7-2, 7-3 der Schalteinrichtung). Die Zusatzdrosseln 4, 41 werden dann im Gleichstrombetrieb durch die Schalteinrichtung 7-1, 7-2, 7-3, 7-4, 7-5 zur Bildung der Netzfilterdrossel zwischen dem Gleichstrom-Fahrdraht 5 und dem Pulswechselrichter 10 in Reihe geschaltet (obere Stellungen der Kontakte 7-1, 7-4, 7-5 und untere Stellungen der Kontakte 7-2, 7-3 der Schalteinrichtung), wobei die Vierquadrantensteller 8, 81 vom Pulswechselrichter abgetrennt sind.

Gemäß Figur 3 ist es auch denkbar, die Zusatzdrosseln 4, 41 im Gleichstrombetrieb parallel zu schalten. In diesem Fall wird im Gleichstrombetrieb jeder Vierquadrantensteller 8, 81 durch eine Leitung 14, 141 überbrückt und wird die jeweilige zusatzdrossel 4, 41, deren einer Anschluß mit der Leitung 14 bzw. 141 verbunden wird, mit ihrem anderen Anschluß mit dem Stromabnehmer 6 verbunden (in Figur 3: obere Stellungen der Kontakte 7-1, 7-2, 7-3, 7-4, 7-5, 7-6). Im Wechselstrombetrieb befinden sich die genannten Kontakte jeweils in ihren unteren Stellungen.

## Patentansprüche

1. Einspeiseschaltung für Mehrsysremtriebzüge, bei der wenigstens ein Vierquadrantensteller (8) zu einem Zwischenkreis (9) und wenigstens einem Pulswechselrichter (10), der wenigstens einen Antrieb (11) des Mehrsystemtriebzuges antreibt, parallel geschaltet ist, wobei im Geichstrombetrieb der Pulswechselrichter (10) über eine Netzfilterdrossel mit dem Gleichstrom-Fahrdraht (5) und im Wechselstrombetrieb der Vierquadrantensteller (8) über einen Transformator (3) mit Streuinduktivität vom Wechselstrom-Fahrdraht (1) angesteuert werden, **dadurch gekennzeichnet, daß** eine Zusatzdrossel (4) vorgesehen ist, die durch eine Schalteinrichtung (7-1, 7-2, 7-3) derart schaltbar ist, daß sie im Gleichstrombetrieb direkt zwischen den Gleichstrom-Fahrdraht (5) und den Pulswechselrichter (10) als Netzdrossel schaltbar ist, wobei der Vierqsadrantensteller (8) wirkungslos geschaltet ist, und daß sie im Wechselstrombetieb zu der Sekundärwicklung (32) des Transformators (3) als Streuinduktivität in Reihe schaltbar ist, wobei die Verbindung der Zusatzdrossel (4) zum Pulswechselrichter (10) unterbrochen ist.

2. Einspeiseschaltung nach Anspruch 1, **dadurch gekennzeichnet, daß** im Gleichstrombetrieb die Schalteinrichtung (7-1, 7-2, 7-3) die Reihenschaltung zwischen der Zusatzdrossel (4) und der Sekundärwicklung (32) unterbricht und den Vierquadrantensteller (8) vom Zwischenkreis (9) abtrennt und durch eine Leitung (14) überbrückt, die sie mit der Zusatzdrossel (4) verbindet, und im Wechselstrombetrieb die Zusatzdrossel (4) zur Sekundärwicklung (32) in Reihe schaltet und den Vierquadrantensteller (8) parallel zur Reihenschaltung aus der Zusatzdrossel (4) und der Sekundärwicklung (32) und parallel zum Zwischenkreis (9) schaltet und die Leitung (14) unterbricht.

3. Einspeiseschaltung nach Anspruch 1 oder 2, **dadurch gekennzeichnet, daß** mehrere Vierquadrantensteller (8, 81) vorgesehen sind, die ausgangsseitig jeweils zu dem Zwischenkreis (9) und dem wenigstens einen Pulswechselrichter (10) parallel geschaltet sind, daß jedem Vierquadrantensteller (8, 81) eine Zusatzdrossel (4, 41) zugeordnet ist, die im Wechselstrombetrieb durch die Schalteinrichtung (7-1, 7-2, 7-3, 7-4, 7-5) jeweils zu einer einem Vierquadrantensteller (8, 81) zugcordneten Sekundärwicklung (32, 321) des Transformators (3) in Reihe schaltbar ist und daß im Gleichstrombetrieb die den Vierquadrantenstellern (8, 81) zugeordneten Zusatzdrosseln (4, 41) durch die Schalteinrichtung (7-1, 7-2, 7-3, 7-4, 7-5) zueinander als Netzfilterdrossel in Reihe schaltbar sind und die Reihenschaltung der Zusatzdrosseln (4, 41) durch die Schalteinrichtung (7-1, 7-2, 7-3, 7-4, 7-5) zwischen den Gleichstrom-Fahrdraht (5) und den wenigstens einen Pulswechselrichter (10) schaltbar ist.

4. Einspeiseschaltung nach Anspruch 1 oder 2, **dadurch gekennzeichnet, daß** mehrere Vierquadrantensteller (8, 81) vorgesehen sind, die ausgangsseitig jeweils zu dem Zwischenkreis (9) und dem wenigstens einen Pulswechselrichter (10) parallel geschaltet sind, daß jedem Vierquadrantensteller (8, 81) eine Zusatzdrossel (4, 41) zugeordnet ist, die im Wechselstrombetrieb durch die Schalteinrichtung (7-1, 7-2, 7-3, 7-4, 7-5, 7-6) jeweils zu einer einem Vierquadrantensteller (8, 81) zugcordneten Sekundärwicklung (32, 321) des Transformators (3) in Reihe schaltbar ist und daß im Gleichstrombetrieb die dem Vierquadrantensteller (8, 81) zugeordneten Zusatzdrosseln (4, 41) durch die Schalteinrichtung (7-1, 7-2, 7-3, 7-4, 7-5, 7-6) als Netzfilterdrossel parallel zueinander schaltbar sind und die Parallelschaltung der Zusatzdrosseln (4, 41) durch die Schalteinrichtung (7-1, 7-2, 7-3, 7-4, 7-5) zwischen den Gleichstrom-Fahrdraht (5) und den wenigstens einen Pulswechselrichter (10) schaltbar ist.

## Claims

1. Feed circuit for multisystem motor-coach trains, in which at least one four-quadrant controller (8) for an intermediate circuit (9) and at least one pulse-controlled inverter (10), which drives at least one drive (11) of the multisystem motor-coach train, are connected in parallel, wherein, in the direct-current mode, the pulse-controlled inverter (10) is driven by the direct-current overhead wire (5) via a power supply system filter inductor and, in the alternating-current mode, the four-quadrant controller (8) is driven via a transformer (3) with stray inductance from the alternating-current overhead wire (1), **characterized in that** an additional inductor (4) is provided and can be switched by a switching device (7-1, 7-2, 7-3) such that it can be connected directly between the direct-current overhead wire (5) and the pulse-controlled inverter (10) as a power supply system inductor in the direct-current mode, with the four-quadrant controller (8) being switched to be ineffective, and **in that**, in the alternating-current mode, it can be connected as a stray inductance in series with the secondary winding (32) of the transformer (3), with the connection of the additional inductor (4) to the pulse-controlled inverter (10) being interrupted.

2. Feed circuit according to Claim 1, **characterized in that**, in the direct-current mode, the switching device (7-1, 7-2, 7-3) interrupts the series circuit between the additional inductor (4) and the secondary winding (32) and disconnects the four-quadrant controller (8) from the intermediate circuit (9), and bridges it by a line (14) which connects it to the additional inductor (4), and, in the alternating-current mode, connects the additional inductor (4) in series with the secondary winding (32) and connects the four-quadrant controller (8) in parallel with the series circuit comprising the additional inductor (4) and the secondary winding (32), and in parallel with the intermediate circuit (9) and interrupts the line (14).

3. Feed circuit according to Claim 1 or 2, **characterized in that** a plurality of four-quadrant controllers (8, 81) are provided and are each connected in parallel on the output side with the intermediate circuit (9) and the at least one pulse-controlled inverter (10), **in that** each four-quadrant controller (8, 81) has an associated additional inductor (4, 41) which, in the alternating-current mode, can be connected in series by the switching device (7-1, 7-2, 7-3, 7-4, 7-5) in each case to one secondary winding (32, 321), which is associated with one four-quadrant controller (8, 81), of the transformer (3), and **in that**, in the direct-current mode, the additional inductors (4, 41) which are associated with the four-quadrant controllers (8, 81) can be connected in series with one another as power supply system filter inductors by means of the switching device (7-1, 7-2, 7-3, 7-4, 7-5), and the series circuit of the additional inductors (4, 41) can be connected between the direct-current overhead wire (5) and the at least one pulse-controlled inverter (10), by means of the switching device (7-1, 7-2, 7-3, 7-4, 7-5).

4. Feed circuit according to Claim 1 or 2, **characterized in that** a plurality of four-quadrant controllers (8, 81) are provided and are each connected in parallel on the output side with the intermediate circuit (9) and the at least one pulse-controlled inverter (10), **in that** each four-quadrant controller (8, 81) has an associated additional inductor (4, 41) which, in the alternating-current mode, can be connected in series by the switching device (7-1, 7-2, 7-3, 7-4, 7-5, 7-6) in each case to one secondary winding (32, 321), which is associated with one four-quadrant controller (8, 81), of the transformer (3), and **in that**, in the direct-current mode, the additional inductors (4, 41) which are associated with the four-quadrant controllers (8, 81) can be connected in parallel with one another as power supply system filter inductors by means of the switching device (7-1, 7-2, 7-3, 7-4, 7-5, 7-6), and the parallel circuit of the additional inductors (4, 41) can be connected between the direct-current overhead wire (5) and the at least one pulse-controlled inverter (10), by means of the switching device (7-1, 7-2, 7-3, 7-4, 7-5).

## Revendications

1. Circuit d'alimentation de rame automotrice à système multiple, dans lequel au moins un régulateur ( 8 ) à quatre cadrans est monté en parallèle à un circuit ( 9 ) intermédiaire et à au moins un onduleur ( 10 ) à impulsions, qui entraîne au moins un entraînement ( 11 ) de la rame automotrice à système multiple, dans lequel, en fonctionnement en courant continu, l'onduleur ( 10 ) à impulsion est commandé par l'intermédiaire d'une bobine de filtre de réseau par le fil ( 5 ) de contact de courant continu et, en fonctionnement en courant alternatif, le régulateur ( 8 ) à quatre cadrans est commandé par l'intermédiaire d'un transformateur ( 3 ) à inductance de fuite par le fil ( 1 ) de contact en courant alternatif, **caractérisé en ce qu'**il est prévu une bobine ( 4 ) supplémentaire qui peut être branchée par un dispositif ( 7-1, 7-2, 7-3 ) de branchement de façon à pouvoir être branchée en tant que bobine de réseau, dans le fonctionnement en courant continu, directement entre le fil ( 5 ) de contact de courant continu et l'onduleur ( 10 ) à impulsion, le régulateur ( 8 ) à quatre cadrans étant monté sans effet et de manière à pouvoir être branché, dans le fonctionnement en courant alternatif, en série avec 1"enroulement ( 32 ) secondaire du transformateur ( 3 ) en tant qu'inductance de fuite, la liaison de la bobine ( 4 ) supplémentaire à l'onduleur ( 10 ) à impulsion étant interrompue.

2. Circuit d'alimentation suivant la revendication 1, **caractérisé en ce que**, dans le fonctionnement en courant continu, le dispositif ( 7-1, 7-2, 7-3 ) de branchement interrompt le circuit série entre la bobine ( 4 ) supplémentaire et l'enroulement ( 32 ) secondaire et sépare le régulateur ( 8 ) à quatre cadrans du circuit ( 9 ) intermédiaire et le shunte par une ligne ( 14 ) qui le relie à la bobine ( 4 ) supplémentaire et, en fonctionnement au courant alternatif, la bobine ( 4 ) supplémentaire est montée en série avec l'enroulement ( 32 ) secondaire et branche le régulateur ( 8 ) à quatre cadrans en parallèle au circuit série composé de la bobine ( 4 ) supplémentaire et de l'enroulement ( 32 ) secondaire et en parallèle au circuit ( 9 ) intermédiaire et interrompt la ligne ( 14 ).

3. Circuit d'alimentation suivant la revendication 1 ou 2, **caractérisé en ce qu'**il est prévu plusieurs régulateurs ( 8, 81 ) à quatre cadrans, qui sont montés en parallèle du côté de la sortie respectivement au circuit ( 9 ) intermédiaire et à au moins un onduleur ( 10 ) à impulsion, **en ce qu'**à chaque régulateur ( 8, 81 ) à quatre cadrans est associé une bobine ( 4, 41 ) supplémentaire qui, dans le fonctionnement en courant alternatif, peut être montée en série, par le dispositif ( 7-1, 7-2, 7-3, 7-4, 7-5 ) de branchement, respectivement avec un enroulement ( 32, 321 ) secondaire du transformateur ( 3 ) associé à un régulateur ( 8, 81 ) à quatre cadrans et **en ce que**, en fonctionnement en courant continu, les bobines ( 4, 41 ) supplémentaires associées au régulateur ( 8, 81 ) à quatre cadrans peuvent être montées en série les unes par rapport aux autres en tant que bobines de filtre de réseau par le dispositif ( 7-1, 7-2, 7-3, 7-4, 7-5 ) de branchement et le circuit série des bobines ( 4, 41 ) supplémentaires peut être monté, par le dispositif ( 7-1, 7-2, 7-3, 7-4, 7-5 ) de branchement, entre le fil ( 5 ) de contact de courant continu et le au moins un onduleur ( 10 ) à impulsion.

4. Circuit d'alimentation suivant la revendication 1 ou 2, **caractérisé en ce qu'**il est prévu plusieurs régulateurs ( 8, 81 ) à quatre cadrans, qui sont montés en parallèle du côté de la sortie respectivement avec le circuit ( 9 ) intermédiaire et avec le au moins un onduleur ( 10 ) à impulsion, **en ce que** à chaque régulateur ( 8, 81 ) à quatre cadrans est associée une bobine ( 4, 41 ) supplémentaire, qui, en fonctionnement en courant alternatif, peut-être montée, par le dispositif ( 7-1, 7-2, 7-3, 7-4, 7-5, 7-6 ), en série respectivement avec un enroulement ( 32, 321 ) secondaire du transformateur ( 3 ), associé au régulateur ( 8, 81 ) à quatre cadrans, et **en ce que**, en fonctionnement en courant continu, les bobines ( 4, 41 ) associées au régulateur ( 8, 81 ) à quatre cadrans peuvent être montées en parallèle les unes par rapport aux autres en tant que bobines de filtre de réseau par le dispositif ( 7-1, 7-2, 7-3, 7-4, 7-5 ) de branchement et le circuit parallèle des bobines ( 4, 41 ) supplémentaires peut être monté, par le dispositif ( 7-1, 7-2, 7-3, 7-4, 7-5 ) de branchement, entre le fil ( 5 ) de contact de courant continu et le au moins un onduleur ( 10 ) à impulsion.
